# EUROPÄISCHE PATENTSCHRIFT

(11) **EP 1 198 094 B1**
(45) Veröffentlichungstag und Bekanntmachung des Hinweises auf die Patenterteilung: **30.11.2005**
(21) Anmeldenummer: 01122225.4
(22) Anmeldetag: 17.09.2001
(51) Int. Cl.: H04L 12/40, G01R 31/11, H04L 12/24

(54) **Verfahren und Vorrichtung zur Ermittlung der Bustopologie eines Bussystems**
System and method for detecting the bus topology of a bus system
Procédé et dispositif pour détecter la topologie de bus d'un système de bus

(30) Priorität: 29.09.2000 DE 10048744
(43) Veröffentlichungstag der Anmeldung: 17.04.2002
(73) Patentinhaber: SIEMENS AKTIENGESELLSCHAFT, 80333 München (DE)
(72) Erfinder: Brendle, Gilles, 91052 Erlangen (DE)

(56) Entgegenhaltungen:
- DE-A- 4 433 116
- US-A- 5 434 861
- KNUTZ O: "ECHOMESSTECHNIK MACHT LAN TRANSPARENT" 1. April 1994 (1994-04-01), NTZ (NACHRICHTENTECHNISCHE ZEITSCHRIFT), VDE VERLAG GMBH. BERLIN, DE, PAGE(S) 242-246 , XP000443232 ISSN: 0027-707X * das ganze Dokument *

## Beschreibung

Die Erfindung bezieht sich auf ein Verfahren zur Ermittlung der Bustopologie eines Bussystems mit mindestens einem Bussegment, das eine Anzahl von an eine Busleitung angeschlossenen Busteilnehmern aufweist. Sie bezieht sich weiter auf eine Vorrichtung zur Durchführung des Verfahrens.

Ein Bussystem oder Feldbus umfasst innerhalb eines komplexen Netzwerkes mit einer Anzahl von Bussegmenten eine Vielzahl von Busteilnehmern in Form von Feldgeräten, wie z. B. Sensoren, Aktoren, speicherprogrammierbaren Steuerungen und Leitstationen. So umfasst beispielsweise das so genannte PROFIBUS DP-Netzwerk üblicherweise bis zu 127 Busteilnehmer, denen Teilnehmeradressen von 0 bis 126 zugeordnet werden können. Dabei können an einem Bussegment als Leitungsstück bis zu 32 Netzkomponenten als Busteilnehmer angeschlossen sein.

Die Leitungslänge eines einzelnen Bussegments ist abhängig von der so genannten Baudrate begrenzt. Diese gibt die über das Bussegment übermittelbare Datenrate an. Bei einer üblichen Datenrate von 12M Baud = 12 · 10⁶Bit/s folgt, dass 1Bit gleich 83ns lang ist. Innerhalb des Netzwerkes werden die einzelnen Bussegmente mittels Leitungstreibern oder so genannten Repeatern verbunden, wobei diese gleichzeitig zur Realisierung von Verzweigungen im Feldbus oder Netzwerk dienen. Dabei sollte die Topologie zumindest des oder jedes Bussegments des Bussystems, d. h. die Bussegmenttopologie bekannt sein, die durch die Reihenfolge und den relativen Abstand der Busteilnehmer und damit durch deren Anordnung an diesem Bussegment gegeben ist. Die Netztopologie berücksichtigt darüber hinaus die Verschaltung der einzelnen Bussegmente untereinander.

Das Dokument US5434861 offenbart ein gängiges Verfahren zur Ermittlung der Busstopologie anhand der Laufzeiten des Abfrage/Antwortsignals.

Der Erfindung liegt daher die Aufgabe zugrunde, ein besonders geeignetes Verfahren zur Ermittlung der Topologie eines Bussystems anzugeben, das eine besonders zuverlässige Bestimmung der Anordnung von Busteilnehmern an einem oder jedem Bussegment auch eines komplexen Bussystems ermöglicht. Darüber hinaus soll eine zur Durchführung des Verfahrens besonders geeignete Vorrichtung angegeben werden.

Bezüglich des Verfahrens wird diese Aufgabe erfindungsgemäß gelöst durch die Merkmale des Anspruchs 1. Zweckmäßige Weiterbildungen dieses Verfahrens sind Gegenstand der auf diesen rückbezogenen Unteransprüche.

Zur Topologieermittlung wird zunächst dem oder jedem Busteilnehmer des Bussegmentes über die Busleitung ein Aufforderungssignal zum Senden eines Antwortsignals übermittelt. Während der Übermittlung des Antwortsignals wird ein Messsignal über die Busleitung gesendet, das vom antwortenden Busteilnehmer reflektiert wird. In dieser Anwendung des Prinzips der Reflexionsmessung wird aus der Zeitspanne zwischen dem Senden des Messsignals und dem Eintreffen des Reflexionssignals vom antwortenden Busteilnehmer dessen relative Position entlang der Busleitung und damit innerhalb des Bussegmentes bestimmt.

Bezüglich der Vorrichtung wird die genannte Aufgabe erfindungsgemäß gelöst durch die Merkmale des Anspruchs 5. Vorteilhafte Ausgestaltungen sind Gegenstand der auf diesen rückbezogenen Unteransprüche.

Die Erfindung geht dabei von der Erkenntnis aus, dass bei einem Busteilnehmer mit abschaltbarem Sender die Sender-Empfänger-Kombination bei deaktiviertem Sender einerseits derart hochohmig ist, dass diese keine Übertragungsstörung auf der Busleitung verursacht, andererseits jedoch bei aktiviertem Sender niederohmig ist. Ein sendender Busteilnehmer verringert dabei seinen Innenwiderstand von unendlich (∞) auf etwa 40Ω mit der Folge einer lokalen Änderung des Wellenwiderstandes der Busleitung des jeweiligen Bussegmentes, an dem dieser sendende Bussteilnehmer angeschlossen ist. Wird nun während des Sendens eines Busteilnehmers ein Messimpuls oder -signal auf die Busleitung gegeben, so wird dieser Impuls bzw. dieses Signal vom sendenden Busteilnehmer reflektiert. Diese Reflexion wiederum kann nach dem Prinzip der Reflexionsmessung detektiert werden. Ein nach dem Prinzip der Reflexionsmessung arbeitendes Verfahren zur Lokalisierung eines Kurzschlusses oder eines Kabelbruches in einem Zweidraht-BusSystem ist z. B. aus der DE 197 26 539 A1 bekannt.

Zweckmäßigerweise wird zur Ermittlung der Bustopologie einem oder jedem Busteilnehmer zunächst ein Aufforderungssignal zum Senden, vorzugsweise in Form eines Messtelegramms, und anschließend ein Messsignal gesendet, das dann von dem oder jedem weiteren Busteilnehmer reflektiert wird, während dieser auf das Messtelegramm antwortet. Das Messtelegramm wird zweckmäßigerweise von einem nachfolgend als Messinitiator bezeichneten aktiven Busteilnehmer des Bussystems gesendet. Das Messsignal wird zweckmäßigerweise von einem durch eine Messschaltung zur Reflexionsmessung zu einem Diagnoserepeater erweiterten Repeater gesendet, der als passiver Busteilnehmer zur Verbindung von mindestens zwei Bussegmenten des Bussystems dient. Aus der Zeitspanne zwischen dem Senden des Messsignals und dem Eintreffen des Reflexionssignals beim Diagnoserepeater wird die Entfernung zwischen diesem und dem jeweiligen Busteilnehmer - und somit dessen relative Position innerhalb des Bussegmentes - bestimmt.

In vorteilhafter Ausgestaltung wird die Entfernung des oder jedes Busteilnehmers vom Diagnoserepeater in einer Topologietabelle hinterlegt. Wenn während einer in zweckmäßiger Weiterbildung ebenfalls auf dem Prinzip der Reflexionsmessung beruhenden Störstellenermittlung oder Leitungsdiagnose eine Störstelle bzw. ein Leitungsfehler entlang der Busleitung ermittelt wird, wird vorteilhafterweise anhand der Topologietabelle festgestellt, zwischen welchen Busteilnehmern die Störstelle bzw. der Leitungsfehler liegt.

Bei dieser Anwendung des Prinzips der Reflexionsmessung wird die Erkenntnis ausgenutzt, dass sich ein Leitungsfehler oder eine Störstelle entlang einer Busleitung durch eine lokale Änderung des Wellenwiderstandes auswirkt und daher einen Impuls oder ein Signal reflektiert. So wird der Wellenwiderstand z. B. bei einem Kurzschluß niederohmig und bei einer Unterbrechung hochohmig. Aus der Zeitspanne zwischen dem Aussenden eines Impulses bzw. eines Signals und dem Eintreffen der Reflexion läßt sich die Entfernung eines Leitungsfehlers bzw. einer Störstelle ermitteln. Darüber hinaus können aus der Polarität der Reflexion Aussagen über die Ursache des Leitungsfehlers abgeleitet werden.

Mit diesem Verfahren und mit dieser Vorrichtung zur Topologieermittlung ist die Bestimmung oder Ermittlung der Entfernung jedes Busteilnehmers zu einem definierten Busteilnehmer desselben Bussegmentes in einfacher sowie zuverlässiger Art und Weise möglich. Insbesondere auch bei einer Topologieänderung, d. h. einer Änderung und/oder Erweiterung der Konfiguration von Busteilnehmern innerhalb eines Bussegmentes ist eine exakte Bestimmung der Reihenfolge und des relativen Abstand der Busteilnehmer und damit deren Anordnung am jeweiligen Bussegment mit besonders geringem Aufwand ermittelbar.

Das erfindungsgemäße Verfahren und die erfindungsgemäße Vorrichtung eignen sich daher besonders für Feldbussysteme, insbesondere für das so genannte PROFIBUS DP-Netz.

Nachfolgend wird ein Ausführungsbeispiel der Erfindung anhand einer Zeichnung näher erläutert. Darin zeigen:
- FIG 1: ein Bussystem mit einem Messinitiator und einem Diagnoserepeater als Busteilnehmer zur Topologieermittlung eines Bussegments, und
- FIG 2: eine bevorzugt im Diagnoserepeater hinterlegte Topologietabelle.

Einander entsprechende Teile sind in beiden Figuren mit den gleichen Bezugszeichen versehen.

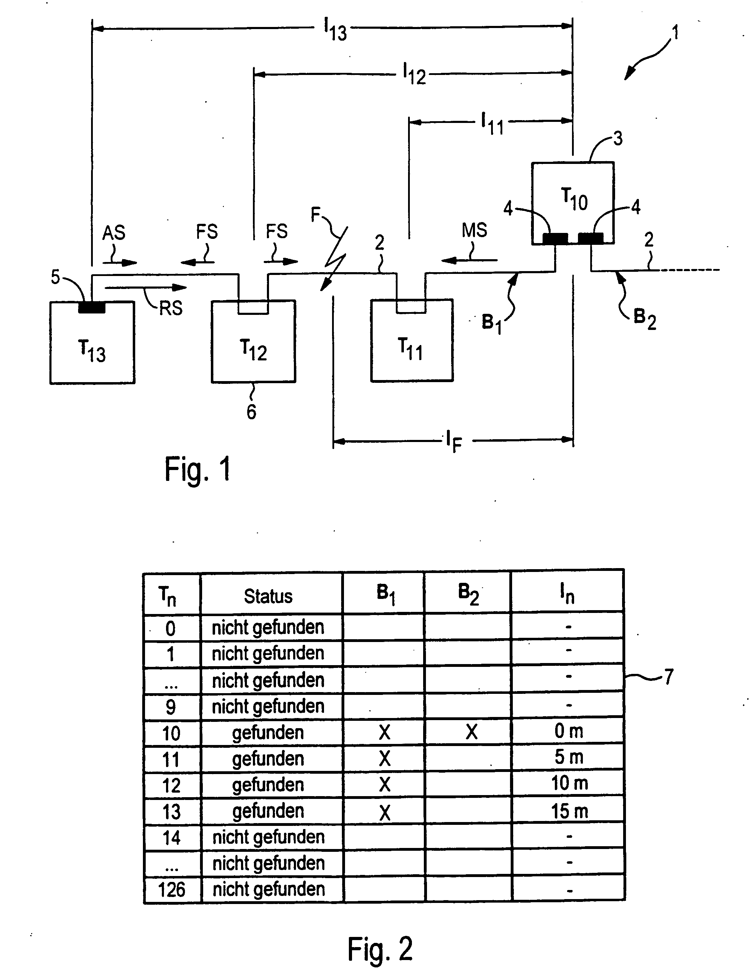

FIG 1 zeigt einen Ausschnitt aus einem komplexeren Bussystem 1, insbesondere eines PROFIBUS DP-Netzes. Beim PROFIBUS-DP-Netzwerk, das eine Vielzahl von Bussegmenten Bₙ umfassen kann, können insgesamt 127 Busteilnehmer mit den Teilnehmeradressen T₀ bis T₁₂₆ innerhalb des Bussystems 1 vorgesehen sein. Ein Bussegment Bₙ ist dabei ein Leitungsstück oder -abschnitt einer Busleitung 2, an dem bis zu 32 Netzkomponenten oder Teilnehmer Tₙ angeschlossen sein können. Die Leitungslänge des jeweiligen Bussegmentes Bₙ ist dabei - abhängig von der Baud-rate der Datenübertragung - begrenzt.

Wie in FIG 1 angedeutet, werden einzelne Bussegmente Bₙ mittels Leitungstreibern oder Leitungsverstärkern - so genannten Repeatern - verbunden, wobei diese Repeater auch gleichzeitig zur Realisierung von Verzweigungen im Netzwerk dienen. Ein solcher Repeater ist im Ausführungsbeispiel ein Diagnoserepeater 3, der zusätzlich zur Repeaterfunktion auch für zumindest ein Bussegment B₁,B₂ eine Messschaltung 4 zur Reflexionsmessung aufweist.

Der Diagnoserepeater 3 weist im Ausführungsbeispiel zwei Messschaltungen oder -einrichtungen 4 mit (nicht dargestellten) Abschlußwiderständen auf. Die Messseinrichtungen 4 sind mit der Busleitung 2 verbunden und jeweils einem Bussegment B₁ bzw. B₂ zugeordnet. Jedes Bussegment umfasst eine Anzahl von an die jeweilige Busleitung 2 angeschlossenen Busteilnehmern Tₙ, wobei im Ausführungsbeispiel lediglich das Bussegment B₁ mit Busteilnehmern T11 bis T13 belegt ist. Dem Busteilnehmer T13 ist ein Abschlusswiderstand 5 zugeschaltet. Das Bussegment B₁ weist einen Messinitiator 6 als aktiven Busteilnehmer T12 auf, während der Diagnoserepeater 3 passiver Busteilnehmer T10 ist.

Die Topologieermittlung des Bussystems 1 wird mittels einer Reflexionsmessung durchgeführt. Dabei wird die Tatsache ausgenutzt, dass sich ein sendender Busteilnehmer Tₙ am Bussegment B₁ oder an der Busleitung 2 ebenso verhält, wie eine durch den Pfeil symbolisierte Störstelle F. Ein sendender Busteilnehmer Tₙ verringert nämlich seinen Innenwiderstand beim Senden von ∞ auf etwa 40Ω. Wird nun ein Messimpuls auf die Busleitung 2 gegeben, dann wird dieser Messimpuls von einem sendenden Busteilnehmer Tₙ reflektiert.

Ein Busteilnehmer Tₙ wird zum Senden veranlasst, indem dieser vom Messinitiator 6 mit einem Aufforderungssignal FS angesprochen und somit zum Senden veranlasst wird. Beim PROFIBUS ist hierzu ein Messtelegramm in Form eines so genannten hochprioren SRD mit DSAP = 3FH ohne Daten (SRD-Messtelegramm) vorgesehen. Verhält sich der angesprochene Busteilnehmer Tₙ normkonform, so antwortet dieser mit einem Antwortsignal AS, das beim PROFIBUS ein so genanntes RS (FC = x3H) oder RS-Messtelegramm ist.

Während ein Busteilnehmer Tₙ auf ein Aufforderungssignal FS (SRD-Messtelegramm) mit einem Antwortsignal AS (SR-Messtelegramm) antwortet, sendet der Diagnoserepeater 3 einen Messimpuls oder ein Messsignal MS, der bzw. das von dem sendenden Teilnehmer Tₙ reflektiert wird. Aus dem Zeitraum zwischen dem Senden des Messimpulses MS und dem Eintreffen der Reflexion, d. h. eines Reflexionssignals RS vom antwortenden Busteilnehmer Tₙ bestimmt die Messeinrichtung 4 des Diagnoserepeaters 3 die relative Position dieses Busteilnehmers Tₙ an der Busleitung 2 und somit innerhalb des Bussegmentes B₁. Aus der durch die 2-fach Leitungs- oder Kabellaufzeit dividierten Laufzeit wird dabei die Entfernung des jeweiligen Busteilnehmers Tₙ vom Diagnoserepeater 3 ermittelt.

Der Diagnoserepeater 3 speichert die ermittelten Entfernungen lₙ der Busteilnehmer Tₙ in einer in FIG 2 dargestellten Topologietabelle 7. In der Topologietabelle 7 sind alle möglichen Busteilnehmer Tₙ des Bussystems 1 enthalten. In die Topologietabelle 7 werden alle Busteilnehmer Tₙ hinsichtlich deren Status und deren Position am jeweiligen Bussegment B_{1,2} sowie hinsichtlich deren Entfernung lₙ vom Diagnoserepeater 3 hinterlegt. Der Status eines noch nicht ausgemessenen Busteilnehmers Tₙ ist offen, während ausgemessene Busteilnehmer Tₙ den Status "gefunden" oder "nicht gefunden" haben. Im Ausführungsbeispiel ist vorausgesetzt, dass am Bussegment B₂ keine Busteilnehmer Tₙ hängen und alle Busteilnehmer Tₙ am Bussegment B₁ ausgemessen sind. Der Diagnoserepeater 3 als Busteilnehmer T10 sitzt sowohl am Bussegment B₁ als auch am Bussegment B₂ und hat von sich selbst die Entfernung L₁₀ = 0m.

Wird im Anschluss an die Ermittlung der Bustopologie die Entfernung einer Störstelle, die in FIG 1 durch den Pfeil F auf der Busleitung 2 des Bussegments B₁ symbolisiert ist, ermittelt, so kann anhand der Topologietabelle 7 festgestellt werden, zwischen welchen Busteilnehmern Tₙ diese Störstelle oder der Leitungsfehler F liegt. Im Ausführungsbeispiel liegt die Störstelle F zwischen dem Busteilnehmer T11, dessen Entfernung l₁₁ = 5m vom Diagnoserepeater 3 beträgt, und dem Busteilnehmer T12, d.h. dem Messinitiator 6, dessen Entfernung l₁₂ = 10m vom Diagnoserepeater 3 beträgt. Die exakte Entfernung l_{F} der Störstelle F vom Diagnoserepeater 2 wird ebenfalls mittels der Messeinrichtung 4 und dabei wiederum vorzugsweise nach dem Prinzip der Reflexionsmessung ermittelt.

Zum Erkennen von Störstellen oder Leitungsfehlern F auf der Busleitung 5 sendet der Diagnoserepeater 3 ein initiierendes Messsignal in die Busleitung 2. Dieses initiierende Messsignal wird aufgrund der Änderung des Wellenwiderstandes der Busleitung 2 an der Störstelle F reflektiert und von der Messeinrichtung 4 als Reflexion oder Reflexionssignal detektiert. Aus der Zeitdifferenz zwischen dem Startzeitpunkt des vom Diagnoserepeater 3 initiierten Messsignals und dem Eintreffen des Reflexionssignals an der Messeinrichtung 4 wird die Entfernung l_{F} der Störstelle oder des Leitungsfehlers F vom Diagnoserepeater 3 ermittelt. Dazu wird wiederum die erfasste Laufzeit durch die 2-fache Leitungs- oder Kabellaufzeit, die beispielsweise 5ns/m beträgt, dividiert.

Das initiierende Messsignal ist vorzugsweise ein Messtelegramm, d.h. ein das Nutzsignal bildendes Datentelegramm. Eine dadurch realisierte passive Reflexionsmessung hat gegenüber einer aktiven Reflexionsmessung den wesentlichen Vorteil einer rückwirkungsfreien Leitungsdiagnose, da kein separates Testsignal oder ein separater Messimpuls während des laufenden Busbetriebs auf die Busleitung 2 gegeben werden muss. Vielmehr wird das eigentliche Nutzsignal verwendet, um Leitungsfehler oder Störstellen F zu detektieren.

Hierzu wird die Erkenntnis ausgenutzt, dass zwischen den als Nutzsignal über den Bus, d.h. über die Busleitung 2 geschickten Datentelegrammen stets eine definierte Pause vorgesehen ist. Beim PROFIBUS als Feldbus ist praktisch festgelegt, dass zwischen zwei Datentelegrammen stets eine ein Zeichen lange Pause eingehalten wird. Diese Pause ist lang genug, um zu vermeiden, dass sich die Folge der mit dem initiierenden Signal ausgesendeten Datentelegramme mit der Folge der dadurch ausgelösten, in entgegengesetzter Richtung laufenden Reflexionen derart überlagern, dass nicht mehr unterschieden werden kann, welches Datentelegramm die erste Reflexion und damit den Anfang des Reflexionssignals ausgelöst hat.

Durch Anwendung der passiven Reflexionsmessung ist somit zusätzlich zur Topologieermittlung eine Erkennung und Lokalisierung von Störstellen oder Leitungsfehlern F und damit eine besonders effektive Leitungsdiagnose auch während des Busbetriebs rückwirkungsfrei möglich.

Durch die Integration der zur Topologieermittlung und vorzugsweise auch zur Leitungsdiagnose dienenden Messeinrichtung 4 in einen dadurch hinsichtlich dessen Funktion zum Diagnoserepeater 3 erweiterten Repeater ist hinsichtlich dieser Messfunktion kein zusätzlicher oder separater Busbaustein innerhalb des Bussystems erforderlich. Wird zusätzlich auch der Messinitiator 6 oder dessen Funktion in den Diagnoserepeater 3 integriert, entfällt auch diesbezüglich ein separater Busbaustein.

## Patentansprüche

1. Verfahren zur Ermittlung der Topologie eines Bussystems (1) mit mindestens einem Bussegment (B₁), das eine Anzahl von an eine Busleitung (2) angeschlossenen Busteilnehmern (Tₙ) aufweist,
- wobei dem oder jedem Busteilnehmer (Tₙ) des Bussegmentes (B₁) über die Busleitung (2) ein Aufforderungssignal (FS) zum Senden eines Antwortsignals (AS) übermittelt wird,
- wobei während der Übermittlung des Antwortsignals (AS) ein Messsignal (MS) über die Busleitung (2) gesendet wird, das vom antwortenden Busteilnehmer (Tₙ) reflektiert wird, und
- wobei aus der Zeitspanne zwischen dem Senden des Messsignals (MS) und dem Eintreffen des Reflexionssignals (RS) die Position des antwortenden Busteilnehmers (Tₙ) innerhalb des Bussegmentes (1) bestimmt wird.

2. Verfahren nach Anspruch 1, bei dem die relative Position des antwortenden Busteilnehmers (Tₙ) in einer Topologietabelle (7) hinterlegt wird.

3. Verfahren nach Anspruch 1 oder 2, bei dem das Messsignal (MS) von einem eine Messeinrichtung (4) zur Reflexionsmessung aufweisenden Busteilnehmer (T₁₂) gesendet wird, wobei die Position des antwortenden Busteilnehmers (Tₙ) durch dessen Entfernung (lₙ) zur Messeinrichtung (4) bestimmt wird.

4. Verfahren nach Anspruch 3, bei dem anhand der Topologietabelle (7) der Fehlerort eines mittels der Messeinrichtung (4) detektierten Leitungsfehlers (F) zwischen zwei Busteilnehmern (Tₙ) ermittelt wird.

5. Vorrichtung zur Ermittlung der Topologie eines Bussystems (1) mit mindestens einem Bussegment (B₁), das eine Anzahl von an eine Busleitung (2) angeschlossenen Busteilnehmern (Tₙ) aufweist,
- mit einem an die Busleitung (2) angeschlossenen Messinitiator (6), der an den oder jeden Busteilnehmer (Tₙ) des Bussegmentes (B₁) ein Aufforderungssignal (FS) zum Senden eines Antwortsignals (AS) übermittelt, und
- mit einer an die Busleitung (2) angeschlossenen Messeinrichtung (4), die während der Übermittlung des Antwortsignals (AS) ein Messsignal (MS) über die Busleitung (2) sendet und aus der Zeitspanne zwischen dem Senden des Messsignals (MS) und dem Eintreffen eines Reflexionssignals (RS) die Entfernung zum antwortenden Busteilnehmer (Tₙ) bestimmt.

6. Vorrichtung nach Anspruch 5, bei der die Messeinrichtung (4) in einen zur Verbindung von mindestens zwei Bussegmenten (B₁, B₂) dienenden Diagnoserepeater (3) des Bussystems (1) integriert ist.

7. Vorrichtung nach Anspruch 5 oder 6, mit in den Diagnoserepeater (2) integriertem Messinitiator (6).

## Claims

1. Method for detecting the topology of a bus system (1) with at least one bus segment (B₁) featuring a number of bus users (Tₙ) connected to a bus (2),
- with the bus user or each bus user (Tₙ) of the bus segment (B₁) being sent a request signal (FS) over the bus (2) asking it to send an answer signal (AS),
- with a measurement signal (MS) being sent over the bus (2) during the transfer of the answer signal (AS) which is reflected by the answering bus user (Tₙ), and
- with the position of the answering bus user (Tₙ) within the bus segment (1) being determined from the time between the sending of the measurement signal (MS) and the arrival of the reflection signal (RS).

2. Method in accordance with claim 1, in which the relative position of the answering bus user (Tₙ) is stored in a topology table (7).

3. Method in accordance with claim 1 or 2, in which the measurement signal (MS) is sent by a bus user (T₁₂) featuring a measuring device (4) for reflection measurement, with the position of the answering bus user (Tₙ) being determined by its distance (lₙ) from the measuring device (4).

4. Method in accordance with claim 3, in which, on the basis of the topology table (7), the fault location of a line error (F) between two bus users (Tₙ) detected by means of the measuring device (4) is determined.

5. Device for detecting the topology of a bus system (1) with at least one bus segment (B₁), which features a number of bus users (Tₙ) connected to a bus (2),
- with a measurement initiator (6) connected to the bus (2) which transfers to the bus user or to each bus user (Tₙ) of the bus segment (B₁) a request signal (FS) asking it to send an answer signal (AS), and
- with a measuring device (4) connected to the bus (2) which, during the transfer of the answer signal (AS), sends a measurement signal (MS) over the bus (2) and determines from the interval between the transmission of the measurement signal (MS) and the arrival of the reflection signals (RS) the distance to the answering bus user (Tₙ).

6. Device in accordance with claim 5, in which the measuring device (4) is integrated into a diagnostic repeater (3) of the bus system (1) serving to connect at least two bus segments (B₁, B₂) .

7. Device in accordance with claim 5 or 6, with a measurement initiator (6) integrated into the diagnostic repeater (2).

## Revendications

1. Procédé de détermination de la topologie d'un système de bus (1) ayant au moins un segment de bus (B₁), qui comporte un certain nombre d'utilisateurs de bus (Tₙ) raccordés à une ligne de bus (2),
- dans lequel on transmet par l'intermédiaire de la ligne de bus (2) à l'utilisateur ou à chaque utilisateur (Tₙ) du segment de bus (B₁) un signal de demande (FS) pour l'émission d'un signal de réponse (AS),
- dans lequel, pendant la transmission du signal de - réponse (AS), on envoie par l'intermédiaire de la ligne de bus (2) un signal de mesure (MS) qui est réfléchi par l'utilisateur de bus qui répond (Tₙ), et
- dans lequel, à partir de l'intervalle de temps entre l'émission du signal de mesure (MS) et l'arrivée du signal réfléchi (RS), on détermine la position de l'utilisateur de bus qui répond (Tₙ) à l'intérieur du segment de bus (B₁).

2. Procédé selon la revendication 1, dans lequel on enregistre la position relative de l'utilisateur de bus qui répond (Tₙ) dans un tableau de topologie (7).

3. Procédé selon la revendication 1 ou 2, dans lequel le signal de mesure (MS) est envoyé par un utilisateur de bus (T₁₂) comportant un dispositif de mesure (4) pour la mesure de réflexion, la position de l'utilisateur de bus qui répond (Tₙ) étant déterminée par son éloignement (lₙ) par rapport au dispositif de mesure (4).

4. Procédé selon la revendication 3, dans lequel on détermine à l'aide du tableau de topologie (7) l'emplacement d'un défaut de ligne (F), détecté au moyen du dispositif de mesure (4), entre deux utilisateurs de bus (Tₙ).

5. Dispositif de détermination de la topologie d'un système de bus (1) ayant au moins un segment de bus (B₁), qui comporte un certain nombre d'utilisateurs de bus (Tₙ) raccordés à une ligne de bus (2),
- comprenant un déclencheur de mesure (6) qui est raccordé à la ligne de bus (2) et qui transmet à l'utilisateur ou à chaque utilisateur (Tₙ) du segment de bus (B₁) un signal de demande (FS) pour l'émission d'un signal de réponse (AS), et
- comprenant un dispositif de mesure (4) qui est raccordé à la ligne de bus (2) et qui, pendant la transmission du signal de réponse (AS), envoie un signal de mesure (MS) par l'intermédiaire de la ligne de bus (2) et détermine à partir de l'intervalle de temps entre l'émission du signal de mesure (MS) et l'arrivée d'un signal réfléchi (RS), l'éloignement par rapport à l'utilisateur de bus qui répond (Tₙ).

6. Dispositif selon la revendication 5, dans lequel le dispositif de mesure (4) est intégré dans un répéteur de diagnostic (3), servant à relier au moins deux segments de bus (B₁, B₂), du système de bus (1).

7. Dispositif selon la revendication 5 ou 6, avec déclencheur de mesure (6) intégré dans le répéteur de diagnostic (2).
